# EUROPÄISCHE PATENTANMELDUNG

(11) **EP 1 953 043 A2**
(43) Veröffentlichungstag der Anmeldung: **06.08.2008**
(21) Anmeldenummer: 08001486.3
(22) Anmeldetag: 28.01.2008
(51) Int. Cl.: B60R 13/02, B60J 1/20

(54) **Dachmodul für Fahrzeuge, vorzugsweise für Kraftfahrzeuge**

(30) Priorität: 02.02.2007 DE 102007006290
(71) Anmelder: Visio Corp Sound GmbH, 73730 Esslingen (DE)
(72) Erfinder: Liesener, Alf, 73614 Schorndorf (DE)
(74) Vertreter: Jackisch-Kohl, Anna-Katharina

(57) **Zusammenfassung**

Es sind Dachmodule (1) bekannt, bei denen Leuchten und Strahler, Schalter, Mikrophone, Ultraschallsensoren und dergleichen in einem Gehäuse angeordnet sind. Die Gehäuse sind relativ klein und im Bereich der Windschutzscheibe (4) oder im hinteren Bereich des Fahrgastraumes angeordnet. Damit das Dachmodul (1) kompakt ausgebildet ist, mehrere Funktionen, Baugruppen und Handhaben aufweist sowie kostengünstig hergestellt werden kann, erstreckt sich das Dachmodul (1) in seiner längsten Ausdehnung über mindestens 50% der Breite des Fahrgastraums. Das Dachmodul (1) ist vorteilhaft ein Vormontagemodul, das die Handhaben (22) und/oder Funktionselemente (21, 23, 24, 26 bis 29) eingebaut aufweist.

## Beschreibung

Die Erfindung betrifft ein Dachmodul für Fahrzeuge, vorzugsweise für Kraftfahrzeuge, nach dem Oberbegriff des Anspruches 1.

Es sind Dachmodule bekannt, bei denen Leuchten und Strahler, Schalter, Mikrofone, Ultraschallsensoren und dergleichen in einem Gehäuse angeordnet sind. Diese Gehäuse sind in ihren Abmessungen relativ klein gehalten und im Bereich der Windschutzscheibe oder im hinteren Bereich des Fahrgastraums angeordnet, wobei sie aus dem Dachhimmel ragen.

Aus der EP 1 223 082 B1 ist eine in ein Fahrzeugdach eingebaute Leuchte bekannt, die in einem Zwischenraum vorgesehen ist, der nach außen durch eine Außenschale und nach innen durch eine Innenschale begrenzt wird. Die Außenschale ist im wesentlichen durch die Außenhaut des Daches und die Innenschale durch den Dachhimmel gebildet. Er ist zur besseren Stabilität und Ausbildung einer vorgegebenen Kontur hinterschäumt und weist Öffnungen zwischen dem Zwischenraum und dem Fahrgastraum auf. Durch diese Öffnungen kann das Licht der im Zwischenraum vorgesehenen Leuchte in den Fahrgastraum Licht aussenden und ermöglicht so eine blendungsfreie indirekte Beleuchtung des Fahrgastraumes. Diese Öffnungen können auch als Ausströmöffnungen für Klimaanlagen oder Heizungen eingesetzt werden. In der DE 10 2004 061 429 A1 ist eine Beleuchtungsanordnung zum Beleuchten von Bereichen in einem Fahrzeuginnenraum beschrieben. Die Beleuchtungsanordnung ist in mittiger Lage mit Abstand von einem großflächigen Glasdach eines Kraftfahrzeuges angeordnet, wobei sich ein Leichtbaurahmen von einer Seite des Glasdaches zur anderen erstreckt. In der Mitte dieses Leichtbaurahmens ist eine Beleuchtung vorgesehen, wobei Lichtquellen in einer Halterung über eine Sammellinse verteilt plaziert sind. Das von den Lichtquellen abgestrahlte Licht wird über die Sammellinse entsprechend vorgegebener Ausleuchtungsbereiche weitergeleitet und somit in die zu beleuchtenden Bereiche gestrahlt. Im Leichtbaurahmen sind ausschließlich Leuchten vorgesehen, wobei der gesamte Leichtbaurahmen vom Glasdach Abstand hat.

Der Erfindung liegt die Aufgabe zugrunde, das gattungsgemäße Dachmodul so auszubilden, daß eine besonders kompakte, mehrere Funktionen, Baugruppen und Handhaben aufweisende Vormontageeinheit kostengünstig herstellbar ist.

Diese Aufgabe wird beim gattungsgemäßen Dachmodul erfindungsgemäß mit den kennzeichnenden Merkmalen des Anspruches 1 gelöst.

Beim erfindungsgemäßen Dachmodul wird besonderer Wert auf eine vereinfachte und schnelle Montage gelegt. Das Dachmodul vereint eine Vielzahl von Handhaben und Funktionselementen, die in bisheriger Ausführung in vielen einzelnen kleinen Baugruppen ausgeführt sind. Das Dachmodul stellt vorteilhaft eine Vormontageeinheit als eigenständige Baueinheit dar. Handhaben, wie beispielsweise Haltegriffe, können vorab in das Dachmodul eingebaut werden. Hierbei erforderliche elektrische Verbraucher werden beim Einbau der Funktionselemente, wie Leuchten, Strahler oder dergleichen zusammen verkabelt und angeschlossen. Bei der Endmontage des Dachmoduls am Fahrzeugdach bzw. am Dachhimmel oder am oberen Rand der Frontscheibe eines Cabrios müssen daher nur noch ein oder zwei elektrische Schnittstellen miteinander verbunden werden, um alle elektrischen Verbraucher entsprechend anzuschließen. Weiter sind durch die Verwendung eines alle Baugruppen (Handhaben, Funktionseinheiten) vereinenden Dachmoduls der Montageaufwand und die Montagezeit erheblich reduziert.

Das Dachmodul kann je nach Anforderung der zu integrierenden Bauteile in seinen Abmessungen entsprechend ausgebildet sein, so daß beispielsweise für eine Fahrzeugbaureihe verschiedene Dachmodule eingebaut werden können. Dies wird vorteilhaft durch eine einheitliche, für alle Dachmodule gleiche Befestigungsanordnung am Fahrzeugdach oder am oberen Rand des Rahmens der Frontscheibe eines Cabrios erreicht. Durch die Integration von Handhaben und/oder Funktionselementen nimmt das Dachmodul in seiner längsten Abmessung mindestens die Hälfte der Fahrzeugdach- bzw. Frontscheibenbreite ein. Selbstverständlich können auch mehrere Dachmodule an einem Fahrzeugdach angebracht werden. Es ist beispielsweise möglich, ein Dachmodul nahe der Windschutzscheibe und zwei weitere Dachmodule entlang den Dachseitenholmen vorzusehen. Selbstverständlich kann ein Dachmodul auch im hinteren Bereich des Fahrzeugdaches oder mittig zum Dach oder den Frontpassagieren zugeordnet positioniert werden. Auch diese Dachmodule weisen eine Vielzahl von Handhaben und/oder Funktionselementen auf.

Weitere Merkmale der Erfindung ergeben sich aus den weiteren Ansprüchen, der Beschreibung und den Zeichnungen.

Die Erfindung wird anhand mehrer in den Zeichnungen dargestellter Ausführungsbeispiele näher erläutert. Es zeigt:
- Fig. 1: ein erfindungsgemäßes Dachmodul mit Handhaben und Bedieneinheiten,
- Fig. 2: ein weiteres erfindungsgemäßes Dachmodul mit integrierten Sonnenblenden,
- Fig. 3: eine dritte Ausführungsform eines erfindungsgemäßen Dachmoduls mit integriertem Schiebedach und/oder Leuchtfeld,
- Fig. 4: im Schnitt eine weitere Ausführungsform eines erfindungsgemäßen Dachmoduls mit mehreren Leuchten und einer Handhabe,
- Fig. 5: einen Schnitt durch ein erfindungsgemäßes Dachmodul mit integrierter Sonnenblende,
- Fig. 6: eine Draufsicht auf die Sonnenblende gemäß Fig. 5 mit einer Antriebseinheit.

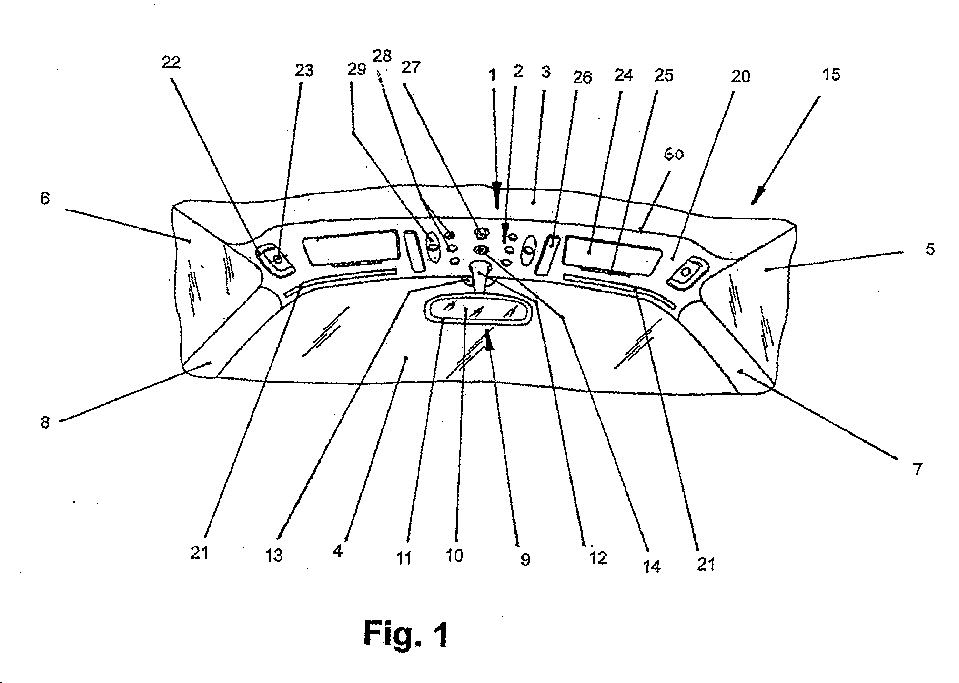

Das Dachmodul 1 gemäß Fig. 1 erstreckt sich über die gesamte Dachbreite und weist Handhaben und Bedieneinheiten auf. Das Dachmodul 1 ist im vorderen Dachbereich eines Kraftfahrzeuges benachbart zur Windschutzscheibe 4 angeordnet und erstreckt sich seitlich bis nahe an die Seitenscheiben 5 und 6 sowie die vorderen A-Säulen 7, 8 des Fahrzeugdaches 15. Der Übergang zwischen den A-Säulen 7, 8 und dem angrenzenden Bereich des Dachmoduls 1 ist kontinuierlich und der Form der A-Säulen entsprechend ausgebildet. Der Übergangsbereich zwischen dem Dachmodul 1 und einem Dachhimmel 3 des Kraftfahrzeuges ist durch eine Trennlinie 60 als Übergang zwischen den unterschiedlichen Materialien dargestellt. Selbstverständlich kann das Dachmodul 1 an seiner Oberseite so ausgebildet oder mit einer solchen Oberflächenbeschichtung versehen sein, daß das Dachmodul 1 und der Dachhimmel 3 nur durch eine kaum sichtbare Trennnaht voneinander getrennt sind. Im Bereich der Seitenscheiben 5, 6 kann das Dachmodul 1 von einer Dichtung zum Abdichten zwischen den Seitenscheiben und der Karosserie umgriffen sein. Ein direkter Kontakt zwischen den Seitenscheiben 5, 6 und dem Dachmodul 1 ist somit sicher verhindert.

Im Übergangsbereich zwischen der Windschutzscheibe 4 und dem Dachmodul 1 ist etwa in halber Breite des Dachmoduls ein Sensor 13 in einem Gehäuse untergebracht. Das Gehäuse kann als Teil des Dachmoduls 1 ausgebildet sein oder optional über eine Schnittstelle mit dem Dachmodul verbunden werden. Die mittige Lage des Sensors 13 bezüglich des Dachmoduls 1 ist vorteilhaft, da auch der Innenrückblickspiegel 9 etwa mittig liegt und somit die elektrischen Verbindungsleitungen und/oder Steuerungsleitungen beider Bauteile 9, 13 zusammengeführt und miteinander verbunden werden können. Diese Zusammenführung bietet sich an, da die beiden Bauteile 9 und 13 Datenverbindungen zu einem oder mehreren Steuergeräten aufweisen.

Der Innenrückblickspiegel 9 ist über einen Spiegelfuß 12 mit dem Dachmodul 1 verbunden. Am freien Ende des Spiegelfußes 12 befindet sich ein Spiegelgehäuse 11 mit einem Spiegelglas 10. In den Innenrückblickspiegel 9 können weitere Bauteile, wie Beleuchtungen, Mikrofone, Garagentoröffner, Sensoren und/oder Schalter, integriert sein. Die Nachbarschaft zwischen Innenrückblickspiegel 9 und Sensor 13 begünstigt die Verwendung gemeinsamer Datenleitungen und Versorgungsanschlüsse, wobei dieser Bereich als zentrale Verzweigung von weiteren Datenleitungen oder Versorgungsleitungen für weitere Module 2 oder Baugruppen des Dachmoduls 1 dienen kann.

Bezogen auf den eingeschränkten Innenraum des Innenrückblickspiegels 9 bietet sich das Dachmodul 1 für die Übernahme von Funktionen oder Baugruppen an, die bislang im Innenrückblickspiegel 9 angeordnet sind. So sind gemäß Fig. 1 beispielsweise ein Mikrofon 14 und ein Schalter 27 entgegengesetzt zur Fahrtrichtung vor dem Innenrückblickspiegel 9 eingebaut. In symmetrischer Anordnung sind entsprechend diesem Ausführungsbeispiel mehrere Module 2, ausgehend von der Fahrzeugmitte, nebeneinander vorgesehen. Von der halben Länge des Dachmoduls 1 ausgehend ist als erstes Modul 2 beispielsweise eine Reihe von Schaltern 28 angeordnet, die zur Betätigung verschiedener elektrischer Verbraucher benötigt werden. Die Schalter 28 liegen in einer Reihe senkrecht zur Längsrichtung des Dachmoduls 1 mit Abstand hintereinander. Benachbart zu den Schaltern 28 ist an der dem Innenrückblickspiegel 9 gegenüberliegenden Seite der Schalter 28 eine Leuchte 29 als Leseleuchte oder Innenraumbeleuchtung sowie mit Abstand zu ihr ein Stauraum 26 angeordnet. Der Stauraum ist für Gegenstände, wie beispielsweise eine Sonnenbrille, vorgesehen und ist mit einem klappbaren Deckel verschließbar. Es ist auch möglich, daß der gesamte Stauraum 26 auf Knopfdruck aus dem Dachmodul 1 in Richtung auf den Fahrer/Beifahrer ausfährt. Der Stauraum 26 kann motorisch wieder zurückgeschoben werden.

Der ausfahrbare Stauraum 26 ist vorteilhaft behälterförmig ausgebildet. Er kann auch so ausgebildet sein, daß er in der versenkten Lage verriegelt ist und die Verriegelung durch Betätigen eines Schalters gelöst wird. Dann wird der Stauraum 26 unter Federkraft bis in eine Anschlagstellung ausgefahren. Der Stauraum 26 kann gegen die Federkraft von Hand oder motorisch in seine versenkte Lage zurückgeschoben werden, bis er wieder verriegelt ist.

Seitlich benachbart zum Stauraum 26 ist eine Sonnenblende 24 am Dachmodul befestigt, die um ein Scharnier 25 schwenkbar ist. Es ist an dem der Windschutzscheibe 4 zugewandten Längsrand der Sonnenblende 24 vorgesehen. Es kann auch am gegenüberliegenden Längsrand der Sonnenblende 24 angeordnet sein. Zwischen der Windschutzscheibe 4 und dem Scharnier 25 ist eine Leuchte 21 in das Dachmodul 1 eingebaut. Sie ist beispielsweise in Streifenform ausgebildet und kann sowohl als Ambienteleuchte wie auch als Innenraumleuchte eingesetzt werden. Die streifenförmige Ausbildung der Leuchte 21 ist besonders bei Verwendung langgestreckter Lichtleiter oder beim Einsatz von elektrolumineszierenden Folien vorgesehen. Die Leuchte 21 liegt nahe am windschutzseitigen Teil der Trennlinie 60 und erstreckt sich in Richtung auf die A-Säule 7, 8 über die Sonnenblende 24 hinaus.

Im Außenbereich nahe der A-Säulen 7, 8 bzw. der Seitenscheiben 5, 6 befindet sich ein ausklappbarer und selbsttätig zurückschwenkender Haltegriff 22. Im Bereich des Haltegriffes ist mittig eine Leuchte 23 angeordnet. Sie kann beispielsweise beim Betätigen des Haltegriffes 22 aktiviert werden und sich selbsttätig nach einer bestimmten Zeit wieder ausschalten. Selbstverständlich sind auch weitere Kombinationen solcher Leuchten 23, wie beispielsweise in Kombination mit der Fahrzeuginnenbeleuchtung, denkbar, die beim Verlassen oder Einsteigen in das Fahrzeug betätigt werden.

Die in Fig. 1 dargestellte Kombination von Modulen 2 in einem Dachmodul 1 ist nur eine von vielen Kombinationsmöglichkeiten aus speziellen Funktionen und/oder Baugruppen. Die Ausgestaltung des Dachmoduls 1 mit den Modulen 2 kann individuell auf das Fahrzeug oder den Kundenwunsch abgestimmt werden.

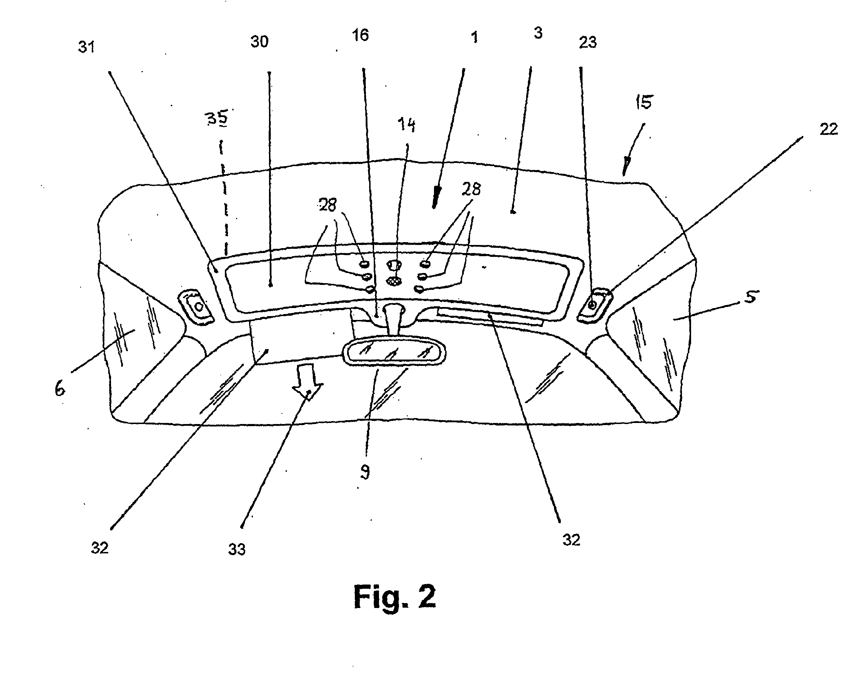

Das Dachmodul 1 gemäß Fig. 2 ist wie die vorige Ausführungsform symmetrisch zu seiner Quermittelebene ausgebildet und mit Abstand von der Windschutzscheibe 4 in das Fahrzeugdach 15 eingebaut. Im Bereich zwischen der in Fahrtrichtung vorderen Kante des Dachmoduls 1 und der Windschutzscheibe 4 ragen Sonnenblenden 32 aus dem Dachmodul 1. Sie können beispielsweise von Hand ausgezogen und zurückgeschoben werden. Es ist auch möglich, daß die Sonnenblenden 32 motorisch über Bedienelemente ein- und ausgefahren werden können. Die als Schalter oder dergleichen ausgebildeten Bedienelemente können im Dachmodul 1 eingebaut sein. Das Dachmodul 1 erstreckt sich über einen großen Teil der Breite des Fahrzeugdaches 15, wobei zwischen dem Dachmodul 1 und den Seitenscheiben 5, 6 die Haltegriffe 22 mit den mittig zu ihnen angeordneten Leuchten 23 liegen.

Das Dachmodul 1 umfaßt eine große, durch einen umlaufenden Rahmen 31 begrenzte Fläche, die beispielsweise als Leuchtenfeld 30 ausgebildet ist. Das Leuchtenfeld 30 wird vorzugsweise aus einer elektrolumineszierenden Folie gebildet, die mittig Aussparungen für Bedienelemente, Schalter 28 oder ein Mikrofon 14 oder Lautsprecher aufweisen. Die Schalter 28 und das Mikrofon 14 liegen in Höhe des Innenrückblickspiegels 9 mit geringem Abstand hinter ihm. An der in Fahrtrichtung vorderen Kante des Dachmoduls 1 ist ebenfalls mittig eine Ausstülpung 16 zur Aufnahme des Innenrückblickspiegels 9 vorgesehen. Die Ausstülpung 16 liegt zwischen den Sonnenblenden 32. Der Innenrückblickspiegel 9 kann beispielsweise über im Dachmodul 1 vorhandene Schalter mit speziellen Funktionen, wie beispielsweise Abblenden des Innenrückblickspiegels, Leseleuchten, Anzeigen und weitere, entsprechend betätigt werden. Durch die Verwendung einer elektrolumineszierenden Folie als Lichtquelle für das Leuchtenfeld 30 baut das Dachmodul 1 sehr flach. Es können weitere Handhaben und/oder Bedienelemente in das Dachmodul 1 integriert werden.

Das Leuchtenfeld 30 kann auch als die dem Fahrgastraum zugewandte Seite eines Schiebe-/Hebedaches 35 ausgebildet sein. In diesem Fall können Bedienelemente, wie beispielsweise Schalter, Leuchten, Lautsprecher oder Mikrofone, im Leuchtenfeld integriert sein.

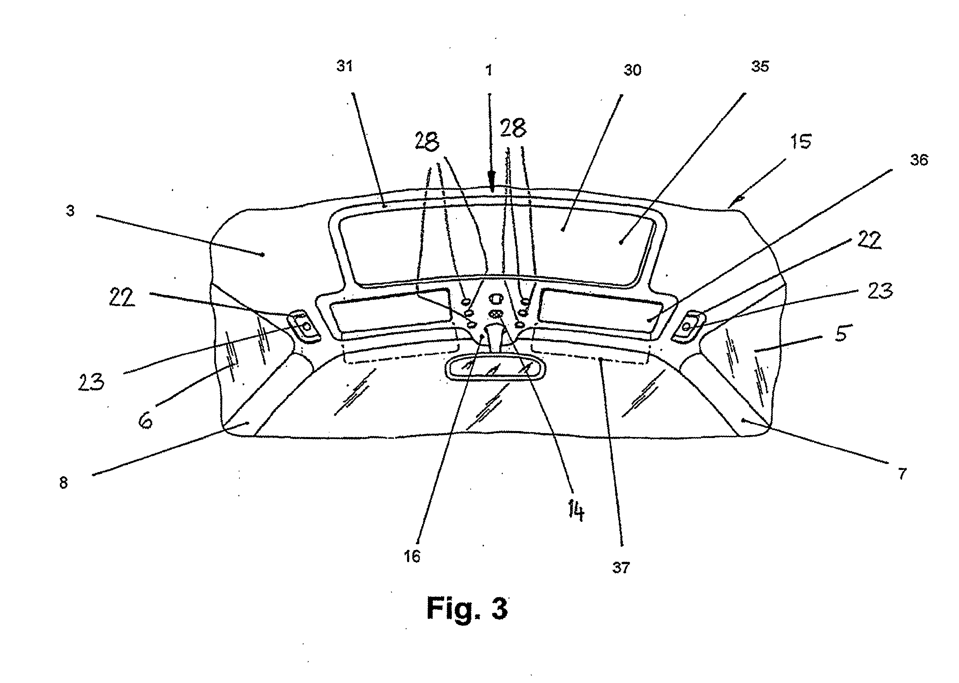

Das Dachmodul gemäß Fig. 3 erstreckt sich wiederum über den größten Bereich der Breite des Fahrzeugdaches 15 und weist zwei Hauptbereiche auf. Im ersten, der Windschutzscheibe 4 unmittelbar benachbarten Hauptbereich sind ausklappbare Sonnenblenden 36 für die Fahrer und Beifahrer im Dachmodul 1 vorhanden. Wie bereits anhand von Fig. 2 beschrieben, befindet sich mittig zwischen den Sonnenblenden 36 eine Ausstülpung 16 zur Aufnahme des Innenrückblickspiegels 9. Hinter dem Innenrückblickspiegel 9 und vor dem Leuchtenfeld 30 sind entgegen Fahrtrichtung weisende und mittig zum Dachmodul 1 liegende Aussparungen für Bedienelemente, wie Schalter 28, ein Mikrofon oder Lautsprecher 14, vorhanden. Im Bereich zwischen diesem Hauptbereich 1 und den Seitenscheiben 5, 6 sind die Haltegriffe 22 mit den mittig zu ihnen liegenden Leuchten 23 angeordnet. Die Bedienelemente 14, 28 sind wie beim vorigen Ausführungsbeispiel entgegen Fahrtrichtung hinter dem Innenrückblickspiegel 9 angeordnet. Die Sonnenblenden 36 liegen beiderseits der Bedienelemente 14, 28.

In dem entgegen Fahrtrichtung hinter dem ersten Hauptbereich liegenden zweiten Hauptbereich ist das Leuchtenfeld 30 oder ein Schiebe-/He-bedach 35 vorgesehen. Dieses Schiebe-/Hebedach 35 oder das Leuchtenfeld 30 kann beispielsweise über Bedieneinheiten des ersten Hauptbereiches betätigt werden. Das Schiebe-/Hebedach 35 oder das Leuchtenfeld 30 ist durch einen umlaufenden Rahmen 31 begrenzt, der in dem nach vorne weisenden Bereich durch das Dachmodul 1 des ersten Hauptbereiches gebildet ist.

Entsprechend den Ausführungsformen nach den Fig. 1 und 2 kann auch bei der vorliegenden Ausbildung das Dachmodul 1 mit allen Bedien- und/oder Funktionselementen außerhalb des Fahrzeuges vormontiert werden, so daß ein komplettes und voll funktionsfähiges Dachmodul nach Anschließen der Verbindungsleitungen in das Fahrzeugdach 15 eingebaut werden kann. Dadurch können viele Montageschritte eingespart werden, wobei durch die Vormontage bereits alle Verbindungsleitungen so verkabelt und angeschlossen werden, daß bei der Montage des Dachmoduls 1 im wesentlichen nur noch eine Verbindung zwischen dem Dachmodul und dem Fahrzeug herzustellen ist.

Der erste Hauptbereich ist quer zur Fahrtrichtung länger als der zweite Hauptbereich. Beide Hauptbereiche können aber auch gleich lang sein. Ebenso ist es möglich, den zweiten Hauptbereich länger auszubilden als den ersten Hauptbereich. Im übrigen ist das Dachmodul 1 wiederum symmetrisch zu seiner Quermittelebene ausgebildet.

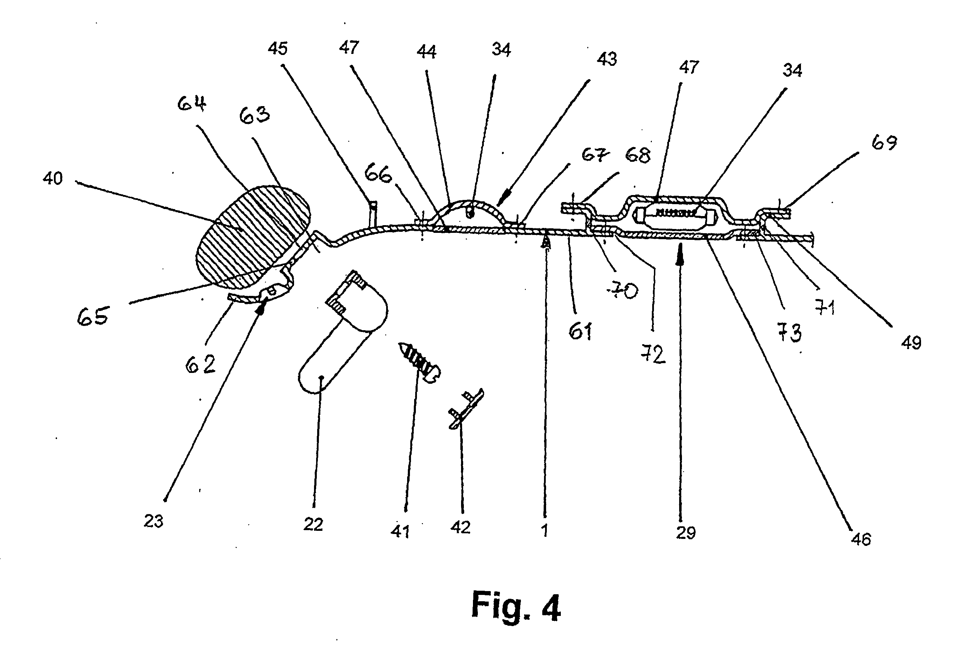

Das Dachmodul 1 gemäß Fig. 4, von dem nur die eine Hälfte dargestellt ist, entspricht hinsichtlich seiner Querschnittsform im wesentlichen dem Konturverlauf des Dachhimmels 3. Das Dachmodul 1 ist beispielsweise im Bereich eines seitlichen Dachholms 40 so an dessen Kontur angepaßt, daß er vollständig zum Fahrgastinnenraum hin vom Dachmodul 1 überdeckt wird. Es hat einen plattenförmigen Grundkörper 61, der in seiner Formgebung an die Form des Dachhimmels 3 angepaßt ist. Mit seinem Randbereich 62 deckt er den seitlichen, in Fahrzeuglängsrichtung verlaufenden Dachholm 40 ab. Im Bereich des Dachholmes 40 ist der Grundkörper 61 mit einer durch eine Verformung gebildeten Vertiefung 63 versehen, in die der Haltegriff 22 eingesetzt wird. Er wird mit wenigstens einer Schraube 41 befestigt, die durch eine Öffnung 64 im Boden 65 der Vertiefung 63 ragt und in den Dachholm 40 geschraubt wird. Über die Schraube(n) 41 wird ein Abdeckteil 42 in den Haltegriff 22 gesteckt. Das Abdeckteil 42 kann in Form und Farbe an den Haltegriff 22 angepaßt sein.

Benachbart zum Handgriff 22 ist im Randbereich 62 des Grundkörpers 61 die Leuchte 23 gehalten, deren Stirnseite vorteilhaft bündig mit der Außenseite des Grundkörpers 61 liegt. Die Leuchte 23 kann so ausgebildet sein, daß sie kontaktlos aktiviert wird, wenn sich ein Fahrzeuginsasse der Leuchte mit der Hand nähert, um selbstständig nach einer gewissen Zeit wieder deaktiviert zu werden. Es ist ferner möglich, daß die Leuchte 23 bei Benutzung des Haltegriffes 22 eingeschaltet wird oder zusammen mit der Innenraumbeleuchtung gesteuert ist.

Da das Dachmodul 1 ein im wesentliches über die gesamte Breite des Daches 15 verlaufendes Bauteil ist, sind an der Rückseite des Dachmoduls 1 zum Dach 15 gerichtete Abstandshalter 45 vorgesehen. Sie versteifen das Dachmodul 1 und gewährleisten im eingebauten Zustand eine einwandfreie Lagesicherung des Dachmoduls 1. Die Abstandhalter 45 verhindern ferner, daß das Dachmodul 1 in Schwingungen geraten kann und somit Störgeräusche oder Risse entstehen. Entsprechend den Ausführungsformen gemäß den Fig. 1 bis 3 sind in das Dachmodul 1 verschiedene Handhaben und/oder Leuchten 21, 23, 29, 43 integriert. Sie können beispielsweise als sehr flachbauende Leuchten mit LEDs als Leuchtmittel ausgebildet sein. Fig. 4 zeigt beispielhaft für die Leuchten 29, 43, daß sie mit Lichtscheiben 46, 47 versehen sind, deren Außenseite vorteilhaft in der dem Fahrgastraum zugewandten Außenseite des Dachmoduls 1 bzw. seines Grundkörpers 61 liegt. Die Lichtscheiben 46, 47 können im gleichen Farbton wie der Grundkörper 61 gehalten sein, so daß sie sich optisch in das Dachmodul 1 einpassen lassen. Die Lichtscheiben 46, 47 können in ihrem Farbton aber auch deutlich unterschiedlich sein, so daß sie sich optisch aus dem Dachmodul 1 herausheben. Es ist möglich, die Lichtscheiben 46, 47 mit Optiken zu versehen, um eine gewünschte Lichtverteilung, Ausleuchtrichtung und dergleichen zu erzielen. Je nach Einbauraum und Verwendungszweck können die Leuchten 21, 23, 29, 43 in ihrer Ausbildung und Dimensionierung variieren. Die besonders flachbauende Leuchte 43 wird in schmalen Bereichen eingesetzt, während konventionelle Leuchten dort eingesetzt werden, wo mehr Bauraum zur Verfügung steht. Die Leuchte 43 hat eine im Querschnitt gebogene Abdeckung 44, die mit abgewinkelten Rändern 66, 67 auf der Rückseite des Grundkörpers 61 befestigt ist. An der Innenseite der konkav gekrümmten Abdeckung 44 ist das Leuchtmittel 43, vorzugsweise eine LED, vorgesehen.

Die Leuchte 29 baut flach und hat eine Abdeckung 47, die mit Randabschnitten 68, 69 auf Befestigungsflanschen 49 aufliegt und auf ihm gehalten ist. Die Befestigungsflansche 49 liegen mit Abstand hinter dem Grundkörper 61 des Dachmoduls 1 und sind durch quer abstehende Stege 70, 71 mit dem Grundkörper 61 verbunden, vorzugsweise einstückig mit ihm ausgebildet. Die Stege 70, 71 liegen mit Abstand vom Rand einer Öffnung 72 im Grundkörper 61, in die die Lichtscheibe 46 eingesetzt ist. Sie liegt mit ihren Rändern 73, die vorteilhaft bis zu den Stegen 70, 71 reichen, an der Rückseite des Grundkörpers 61 auf und ist mit ihm fest verbunden, beispielsweise durch Schrauben. Als Leuchtmittel 43 kommt eine konventionelle Glühlampe zum Einsatz.

Das Dachmodul 1 nach Fig. 4 entspricht im wesentlichen der Ausführungsform gemäß Fig. 1, bei der die Seitenbereiche des Grundkörpers 61 winklig zum Mittelteil verlaufen. Beim Ausführungsbeispiel nach Fig. 2 hat der Grundkörper 61 keine abgebogenen oder abgewinkelten Randbereiche, da das Dachmodul 1 nicht bis zu den Seitenfenstern 5, 6 bzw. den A-Säulen 7, 8 reicht. Das Dachmodul 1 wird in diesem Fall am Fahrzeugdach befestigt.

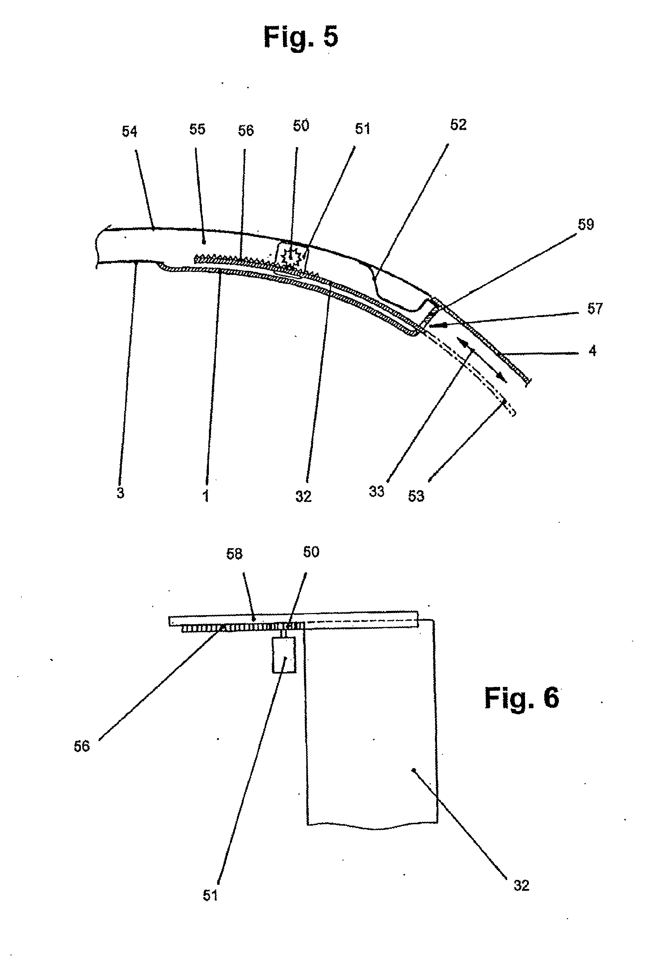

Fig. 5 zeigt einen Schnitt durch die Sonnenblende 32 des Dachmoduls 1 gemäß Fig. 2. Die Sonnenblende 32 ist in eingeschobener Lage in einem Zwischenraum 55 untergebracht. Er wird nach außen durch das Fahrzeugdach 54 und nach innen durch das Dachmodul 1 begrenzt. Es erstreckt sich vom Dachhimmel 3 aus bis zum oberen Rand der Windschutzscheibe 4. Das Dachmodul 1 weist einen senkrecht auf die Windschutzscheibe 4 treffenden Randabschnitt 59 auf, in dem eine schmale, längliche Durchlaßöffnung 57 für den Durchtritt der Sonnenblende 32 vorgesehen ist. Die Durchlaßöffnung entspricht im wesentlichen den Abmessungen der Sonnenblende 32, die im rückwärtigen Bereich des Dachmoduls 1 entsprechend der Kontur aus Windschutzscheibe 4 und äußerem Dach 54 und des Dachmoduls 1 im Zwischenraum 55 geführt wird. Durch die gekrümmte Ausbildung kann die Sonnenblende 32 im Zwischenraum 55 auch durch enge Stellen zwischen dem Dachmodul 1 und dort angeordneten Bauteilen, wie beispielsweise einem vorderen Dachquerträger 52, einwandfrei hindurchgeführt werden.

An wenigstens einer seitlichen Führungsschiene 58 ist für die Sonnenblende 32 eine der Krümmung der Sonnenblende angepaßte Zahnstange 56 vorgesehen. In sie greift ein Antriebsritzel 50 eines Motors 51 ein, der im Zwischenraum 55 untergebracht ist und durch Bedienelemente ein- und ausgeschaltet werden kann. Je nach Drehrichtung des Antriebsritzels 50 wird die Zahnstange 56 und mit ihr die Sonnenblende 32 entsprechend verschoben. Vorteilhaft ist die Sonnenblende 32 an zwei einander gegenüberliegenden Rändern mit jeweils einer Zahnstange 56 versehen, so daß die Sonnenblende 32 verkantungsfrei ein- und ausgefahren werden kann.

Das Ein- bzw. Ausfahren der Sonnenblende 32 in Bewegungsrichtung 33 kann sensorgesteuert erfolgen. Hierfür wird wenigstens ein Helligkeitssensor eingesetzt, der je nach Sonneneinstrahlung Steuersignale abgibt, mittels derer das Antriebsritzel 50 in der erforderlichen Richtung gedreht wird. Auf diese Weise wird die Sonnenblende selbsttätig aus- und eingefahren.

Das Dachmodul kann selbstverständlich auch so ausgebildet sein, dass es sich am oberen Rand der Frontscheibe eines Cabrios montieren lässt.

## Patentansprüche

1. Dachmodul für Fahrzeuge, vorzugsweise für Kraftfahrzeuge, das im Fahrzeug zum Fahrgastraum weisend eingebaut ist und Handhaben und/oder Funktionselemente aufweist,
**dadurch gekennzeichnet, dass** sich das Dachmodul (1) in seiner längsten Ausdehnung über mindestens 50% der Breite des Fahrgastraumes erstreckt.

2. Dachmodul nach Anspruch 1,
**dadurch gekennzeichnet, dass** sich das Dachmodul (1) in seiner längsten Ausdehnung im Wesentlichen über die gesamte Breite und/oder über wenigstens 50% der Länge des Fahrgastraumes erstreckt.

3. Dachmodul nach Anspruch 1 oder 2,
**dadurch gekennzeichnet, dass** das Dachmodul (1) in der Gestaltung seiner dem Fahrzeuggastraum zugewandten Oberfläche der Oberfläche des Dachhimmels (3) entspricht.

4. Dachmodul nach einem der Ansprüche 1 bis 3,
**dadurch gekennzeichnet, dass** das Dachmodul (1) über die Befestigung wenigstens einer vorteilhaft als Griff ausgebildeten Handhabe (22) am Dachhimmel (3) und/oder der Dachstruktur befestigt ist.

5. Dachmodul nach einem der Ansprüche 1 bis 4,
**dadurch gekennzeichnet, dass** das Funktionselement (27, 28) wenigstens ein Schalter ist.

6. Dachmodul nach einem der Ansprüche 1 bis 5,
**dadurch gekennzeichnet, dass** das Funktionselement (24, 32, 36) wenigstens eine vorteilhaft zwischen einer Ruhelage und einer Gebrauchslage verschiebbare Sonnenblende ist.

7. Dachmodul nach Anspruch 6,
**dadurch gekennzeichnet, dass** die Sonnenblende (32) in der Ruhelage verdeckt im und/oder hinter dem Dachmodul (1) untergebracht ist.

8. Dachmodul nach Anspruch 6 oder 7,
**dadurch gekennzeichnet, dass** das Dachmodul (1) wenigstens eine Durchtrittsöffnung (57) für die Sonnenblende (32) in einem Randabschnitt (59) aufweist, der vorteilhaft etwa rechtwinklig zu einem Grundkörper (61) des Dachmoduls (1) verläuft.

9. Dachmodul nach einem der Ansprüche 6 bis 8,
**dadurch gekennzeichnet, dass** die Sonnenblende (32) motorisch verfahrbar ist, und dass vorteilhaft der Motor (51) in Abhängigkeit von den Signalen wenigstens eines Helligkeitssensors steuerbar ist.

10. Dachmodul nach einem der Ansprüche 6 bis 9,
**dadurch gekennzeichnet, dass** die Sonnenblende (32) mit wenigstens einer Zahnstange (56) versehen ist, in die ein Antriebsritzel (50) des Motors (51) eingreift.

11. Dachmodul nach einem der Ansprüche 1 bis 10,
**dadurch gekennzeichnet, dass** das Funktionselement (26) ein Ablagefach und/oder ein Stauraum ist.

12. Dachmodul nach einem der Ansprüche 1 bis 11,
**dadurch gekennzeichnet, dass** das Funktionselement (21, 23, 29, 43) eine Leuchte ist, die vorteilhaft eine Fahrgastinnenraumbeleuchtung, eine Ambientebeleuchtung und/oder eine Leseleuchte ist.

13. Dachmodul nach Anspruch 12,
**dadurch gekennzeichnet, dass** die Leuchte (21) streifenförmig ausgebildet und vorteilhaft im Bereich zwischen der Windschutzscheibe (4) und der Sonnenblende (24, 32, 36) vorgesehen ist.

14. Dachmodul nach Anspruch 12,
**dadurch gekennzeichnet, dass** die Leuchte (29) ein Leuchtfeld (30) ist, das vorteilhaft durch eine elektrolumineszierende Folie gebildet und vorteilhaft die zum Fahrgastraum weisende Fläche eines Schiebedaches (35) ist, an dem vorzugsweise das Dachmodul (1) befestigt ist.

15. Dachmodul nach einem der Ansprüche 1 bis 14,
**dadurch gekennzeichnet, dass** das Funktionselement ein Mikrofon und/oder ein Lautsprecher (14) ist.

16. Dachmodul nach einem der Ansprüche 1 bis 15,
**dadurch gekennzeichnet, dass** das Dachmodul (1) vorzugsweise mittig an seiner in Fahrtrichtung liegenden Vorderkante eine Ausstülpung (16) für einen Spiegelfuß (12) eines Innenrückblickspiegels (9) aufweist, die vorteilhaft einstückig mit dem Dachmodul (1) ausgebildet oder als gesondertes Bauteil am vorteilhaft spiegelsymmetrisch zu seiner Quermittelebene ausgebildeten Dachmodul (1) angeordnet ist.

17. Dachmodul, insbesondere nach einem der Ansprüche 1 bis 16,
**dadurch gekennzeichnet, dass** das Dachmodul (1) ein Vormontagemodul ist, das die Handhaben und/oder Funktionselemente eingebaut aufweist.

18. Dachmodul nach einem der Ansprüche 1 bis 17,
**dadurch gekennzeichnet, dass** die Randbereiche (62) des Dachmoduls (1) abgewinkelt sind, und dass vorteilhaft im abgewinkelten Randbereich (62) die Handhabe (22) befestigt ist und vorzugsweise der abgewinkelte Randbereich (62) eine Vertiefung (63) zur Aufnahme der Handhabe (22) aufweist, benachbart zu der die Leuchte (23) angeordnet ist.

19. Dachmodul nach einem der Ansprüche 1 bis 18,
**dadurch gekennzeichnet, dass** die Leuchte (29, 43) eine Lichtscheibe (46, 47) aufweist, deren Außenseite bündig liegt zur Außenseite des Dachmoduls (1) und dass vorteilhaft die Lichtscheibe (46, 47) in einem Mehrfarb-Spritzguss-Verfahren in das Dachmodul (1) integriert ist.
